# EUROPÄISCHE PATENTSCHRIFT

(11) **EP 2 156 139 B1**
(45) Veröffentlichungstag und Bekanntmachung des Hinweises auf die Patenterteilung: **27.04.2011**
(21) Anmeldenummer: 08749417.5
(22) Anmeldetag: 05.05.2008
(51) Int. Cl.: G01B 11/25

(54) **VORRICHTUNG UND VERFAHREN ZUM BERÜHRUNGSLOSEN ERFASSEN RÄUMLICHER KOORDINATEN EINER OBERFLÄCHE**
DEVICE AND METHOD FOR NON-CONTACT RECORDING OF SPATIAL COORDINATES OF A SURFACE
DISPOSITIF ET PROCÉDÉ POUR L'ACQUISITION SANS CONTACT DE COORDONNÉES SPATIALES D'UNE SURFACE

(30) Priorität: 04.05.2007 DE 102007022361
(43) Veröffentlichungstag der Anmeldung: 24.02.2010
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: MUNKELT, Christoph, 07743 Jena (DE); SCHMIDT, Ingo, 07751 Jena (DE); KÜHMSTEDT, Peter, 07751 Jena (DE); NOTNI, Gunther, 07749 Jena (DE)
(74) Vertreter: Pfenning, Meinig & Partner GbR
(86) Internationale Anmeldenummer: PCT/EP2008/003740
(87) Internationale Veröffentlichungsnummer: WO 2008/135294

(56) Entgegenhaltungen:
- WO-A-97/05449
- GB-A- 2 328 280
- US-A1- 2007 097 381
- US-B1- 6 930 704

## Beschreibung

Die vorliegende Erfindung betrifft eine Vorrichtung zum berührungslosen Erfassen räumlicher Koordinaten einer Oberfläche, insbesondere zur Vermessung von statischen, schwer zugänglichen Objekten, sowie ein entsprechendes Verfahren zum berührungslosen Erfassen räumlicher Oberflächenkoordinaten.

An sich bekannt ist es, räumliche Koordinaten von Oberflächen dadurch berührungslos zu erfassen, dass mit mindestens einem Projektor Streifenmuster auf die jeweilige Oberfläche projiziert werden und die Oberfläche dabei mit mindestens einer Kamera aufgenommen wird, wobei Tiefeninformationen durch Triangulieren von Objektpunkten, die mit Hilfe der Streifenmuster identifiziert werden, gewonnen werden. Ein derartiges Verfahren ist beispielsweise in der Druckschrift DE 102 19 054 A1 offenbart sowie auch in GB 2328280A, US 2007/097381A, WO97/05449A und US 6930704B.

Herkömmliche streifenprojektionsbasierte 3D-Sensoren sind während der Messdatenaufnahme im Allgemeinen statisch gelagert. Dabei kommt ein Stativ oder eine manuelle oder automatische Positionierungseinheit für einen verwendeten Sensor bzw. das Objekt zum Einsatz. Eine Übertragung von Daten sowie eine Stromversorgung des Sensors wird dabei im Stand der Technik über eine Kabelverbindung an ein festes Strom- und/oder Datennetz realisiert.

3D-Scanner nach dem Stand der Technik haben den Nachteil, dass die Bewegungsfreiheit des Sensors durch die Kabelverbindung, die insbesondere zur Stromversorgung erforderlich ist, eingeschränkt wird. Dadurch kann man sich nicht uneingeschränkt mit dem Sensor um ein zu vermessendes Objekt herum bewegen.

Der vorliegenden Erfindung liegt daher die Aufgabe zugrunde, eine Vorrichtung zum berührungslosen Erfassen räumlicher Koordinaten einer Oberfläche zu entwickeln, der dem gegenüber flexibler einsetzbar ist. Diese Vorrichtung soll es auch erlauben, auf Basis einer vergleichsweise schnellen strukturierten Beleuchtung dichte 3D-Messpunktwolken in einem vollständig beleuchteten Feld gleichzeitig und damit schnell zu messen. Der Erfindung liegt ferner die Aufgabe zugrunde, ein entsprechendes flexibel einsetzbares Verfahren zum berührungslosen Erfassen räumlicher Koordinaten einer Oberfläche vorzuschlagen.

Diese Aufgabe wird erfindungsgemäß gelöst durch eine Vorrichtung mit den Merkmalen des Hauptanspruchs sowie durch ein Verfahren mit den Merkmalen des Nebenanspruchs. Vorteilhafte Weiterentwicklungen und Ausgestaltungen der Erfindung ergeben sich mit den Merkmalen der Unteransprüche.

Eine flexible Einsetzbarkeit der vorgeschlagenen Vorrichtung, die einen Sensorkopf und eine mit dem Sensorkopf verbundene Steuereinheit umfasst, ergibt sich dadurch, dass der Sensorkopf als tragbares Handgerät ausgeführt ist und einen Projektor mit einem bildgebenden Element und einem Projektionsobjektiv zum Projizieren eines auf dem bildgebenden Element generierbaren änderbaren Musters auf die Oberfläche sowie mindestens eine Kamera zur Beobachtung der Oberfläche umfasst, wobei die Steuereinheit ebenfalls als tragbares Gerät ausgeführt ist und Mittel zum Ansteuern des bildgebenden Elements, zur Auslösung von Aufnahmen durch die mindestens eine Kamera und zur Verarbeitung von durch die mindestens eine Kamera erzeugten Bilddaten umfasst, wobei ferner in der Steuereinheit oder im Sensorkopf ein elektrochemischer Energiespeicher für eine Energieversorgung des Sensorkopfs und der Steuereinheit untergebracht ist und keine Kabelverbindung des Sensorkopfes oder der Steuereinheit zur weiteren, stationären Komponenten der Vorrichtung vorgesehen ist. Dadurch wird insbesondere erreicht, dass auch bei einer Aufnahme der Oberfläche eines Gegenstands von verschiedenen Seiten, insbesondere bei eine Rundumvermessung, kein Kabelbaum die Bewegungsfreiheit einer die Messung durchführenden Person behindert oder bei einer Messung störend im Bild ist. Die vorgeschlagene Vorrichtung ist also netzunabhängig und eignet sich damit besonders gut für eine Handführung des Sensorkopfes durch eine Person, die auch die Steuereinheit bei sich tragen kann.

Ein entsprechendes Verfahren, das mit einer derartigen Vorrichtung durchgeführt werden kann und bei dem die Steuereinheit von einer den Sensorkopf führenden Person getragen werden kann, umfasst vorteilhafter Weise folgende Schritte:
- Aufprojizieren verschiedener Streifenmuster auf die Oberfläche und Aufnehmen der mit den Streifenmustern beleuchteten Oberfläche mittels des Projektors und der mindestens einen Kamera des handgeführten Sensorkopfs,
- Identifizieren einander entsprechender Bildpunkte in Bildebenen der beiden Kameras oder einander entsprechender Punkte in der Bildebene der Kamera und auf dem bildgebenden Element mittels der aufprojizierten Muster und
- Ermitteln von Tiefeninformationen für Objektpunkte durch Triangulieren auf Basis der den jeweiligen Objektpunkten entsprechenden, so identifizierten Bildpunkte oder Punkte.

Bildpunkte zweier Kameras seien dabei als einander entsprechend bezeichnet, wenn der gleiche Objektpunkt auf sie abgebildet wird. Ein Punkt in der Bildebene einer Kamera und ein Punkt auf dem bildgebenden Element seien als einander entsprechend bezeichnet, wenn das Projektionsobjektiv den Punkt auf dem Bildgebenden Element auf den Objektpunkt abbildet, der durch die Kamera auf den Punkt in der Bildebene der Kamera abgebildet wird.

Typischerweise wird der Sensorkopf der Vorrichtung zwei Kameras zur Beobachtung der Oberfläche aus zwei unterschiedlichen Richtungen umfassen. Dann können zur Ermittlung räumlicher Koordinaten der Oberfläche Objektpunkte auf der Oberfläche auf Basis der einander entsprechenden Bildpunkte der zwei Kameras trianguliert werden. Die nachfolgende Beschreibung bezieht sich in der Regel auf diese Ausführung der Erfindung. Das Triangulieren kann jedoch genauso gut auf Basis einander entsprechender Punkte in der Bildebene einer Kamera und auf dem Bildgebenden Element erfolgen. Dann genügt es, wenn der Sensorkopf nur eine Kamera umfasst. Die nachfolgend beschriebenen Ausgestaltungen der Vorrichtung können also jeweils dadurch abgewandelt werden, dass eine der Kameras insofern durch den Projektor ersetzt wird.

Typische Ausführungen der Erfindung sehen vor, dass zwischen dem Sensorkopf und der Steuereinheit eine Kabelverbindung vorgesehen ist, die Stromversorgungsleitungen, Leitungen zum Ansteuern des bildgebenden Elements, eine Leitungsverbindung zum Übertragen von Kamerasignalen von den Kameras zur Steuereinheit und zum Übertragen von Steuersignalen von der Steuereinheit zu den Kameras sowie Signalleitungen zum Übertragen eines Auslösesignals an die Steuereinheit umfasst. Die Kameras sind dabei typischerweise als Digitalkameras ausgeführt. Da die Steuereinheit ebenfalls als tragbares Gerät ausgeführt ist und von der die Messung durchführenden Person bei sich getragen werden kann, ist diese Kabelverbindung nicht hinderlich.

Zum Ansteuern des bildgebenden Elements kann die Steuereinheit beispielsweise über ein Digital Visual Interface (DVI) oder einen VGA-Anschluss mit dem Sensorkopf und dort mit dem bildgebenden Element verbunden sein.

Die Kameras des Sensorkopfs können beispielsweise über eine FireWire-Schnittstelle oder eine USB-Schnittstelle mit der Steuereinheit verbunden sein. Derartige Schnittstellen sind zur Übertragung von Bilddaten von mit Kamerachips ausgestatteten Kameras geeignet. Unter Umständen kann der Sensorkopf auch mit mehr als zwei Kameras zum Vermessen der Oberfläche ausgestattet sein, beispielsweise um Mehrdeutigkeiten zu vermeiden.

Bevorzugte Ausführungen der Erfindung sehen vor, dass neben dem Sensorkopf und der Steuereinheit eine von dem Sensorkopf und der Steuereinheit räumlich getrennte Basiseinheit vorgesehen ist, wobei Mittel für einen drahtlosen Datenaustausch zwischen der Basiseinheit und der Steuereinheit oder dem Sensorkopf vorgesehen sind. Aufwendige Rechenschritte, die für eine Durchführung eines entsprechenden Vermessungsverfahrens erforderlich sind, können dadurch in der Basiseinheit durchgeführt werden, die selbst nicht tragbar sein muss und daher insbesondere auch nicht netzunabhängig ausgeführt sein muss. Bei der Basiseinheit kann es sich beispielsweise um einen PC handeln.

Die genannten Mittel zum drahtlosen Datenaustausch können insbesondere einen Kanal zum Transport von aus Kamerabildern der zwei Kameras gewonnenen Daten umfassen. Diese Daten können durch Vorverarbeitung und/oder Teilauswertung bereits in der Steuereinheit aus Bilddaten der zwei Kameras gewonnen werden. Dadurch lässt sich eine reduzierte Datenmenge drahtlos zu übertragener Daten erreichen. Bei den vorverarbeiteten oder teilausgewerteten Daten kann es sich beispielsweise um Daten handeln, welche Phasenbilder oder Messbilder repräsentieren, wobei ein aufwendiges Auswerten dieser Daten dann in der Basiseinheit geschehen kann. Gleichzeitig entfällt durch die Vorverarbeitung in der Steuereinheit in vorteilhafter Weise ein Erfordernis einer drahtlosen Übertragung von Bilddaten in Echtzeit. Ein ausgesprochen schneller Datenverkehr ist daher nur zwischen dem Sensorkopf und der Steuereinheit nötig, wo dies aufgrund der Kabelverbindung problemlos möglich ist. Dadurch lassen sich in sehr kurzer Zeit Aufnahmesequenzen auch mit mehreren Streifenmustern manuell und netzunabhängig durchführen, was bei einer herkömmlichen drahtlosen Datenübertragung von beispielsweise analog sendenden Kameras nicht möglich wäre. Unter Umständen können aber auch beispielsweise zur Erzeugung von Statusbildern vollständige Bilddatensätze drahtlos zur Basiseinheit übertragen werden.

Als Mittel zum drahtlosen Datenaustausch zwischen der Steuereinheit und der Basiseinheit, insbesondere zur Übertragung von Bilddaten oder aus Bilddaten gewonnener Daten, eignet sich beispielsweise eine herkömmliche WLAN-Verbindung.

Ein vorteilhaftes Verfahren, das sich mit einer entsprechenden Vorrichtung mit Mitteln zum drahtlosen Datenaustausch zwischen der Steuereinheit und der Basiseinheit durchführen lässt, sieht vor, dass
- zum Aufnehmen einer Bildsequenz ein Auslösebefehl vom Sensorkopf, der dafür einen Auslöser aufweisen kann, an die Steuereinheit übertragen wird und
- durch die Steuereinheit das bildgebende Element zur Bildung einer Sequenz von Streifenmustern angesteuert wird und Steuersignale an die Kameras gegeben werden zum Auslösen von jeweils einer mit den Streifenmustern synchronisierten Aufnahmesequenz, wobei
- so gewonnene Bilddaten von den Kameras an die Steuereinrichtung übergeben werden, wo die Bilddaten vorverarbeitet werden zur Bildung von Phasenbilder wiedergebenden Daten, und
- die Phasenbilder wiedergebenden Daten durch die Steuereinheit drahtlos an die Basisstation übermittelt werden, wobei diese Basisstation weitere Rechenschritte zum Identifizieren einander entsprechender Bildpunkte und zum Triangulieren der Objektpunkte durchführt.

Als Phasenbild sei dabei eine Zuordnung einer ein Streifenmuster charakterisierenden Größe (Phase) zu Bildpunkten bezeichnet. Vorzugsweise sollte eine Aufnahmesequenz dabei höchstens 150 ms dauern, damit eine präzise Vermessung ohne Verwackeln bei einer Handführung des Sensorkopfs möglich ist. Dabei können Algorithmen zur Anwendung kommen, die eine Identifizierung einander entsprechender Bildpunkte und eventuell auch eine Selbstkalibrierung bei 8 bis 10 Streifenmustern pro Aufnahmesequenz, also bei 8 bis 10 Aufnahmen pro Kamera und Aufnahmesequenz, ermöglichen. Um eine für einen Handbetrieb hinreichend rasche Messung zu erlauben, sollte die Vorrichtung in jedem Fall eine Bildwiederholrate von mindestens 60 Hz erlauben.

Eine vorteilhafte Ausgestaltung des Verfahrens sieht vor, dass verschiedene, einander stellenweise überlappende Teile der Oberfläche von verschiedenen Sensorkopfpositionen aus aufgenommen werden. Insbesondere sind Rundumvermessungen von Oberflächen von Gegenständen möglich, die sich durch die Tragbarkeit des Sensorkopfs und der Steuereinheit besonders einfach durchführen lassen.

Die Vorrichtung kann bei bevorzugten Ausführungen der Erfindung zusätzlich mindestens eine mit der Basiseinheit verbundene stationäre Verknüpfungskamera umfassen, die beispielsweise auf einem Stativ fest montiert sein kann, wobei die Mittel zum drahtlosen Datenaustausch dann einen Kanal zum Transport von Steuersignalen zum Synchronisieren von Auslösungen der zwei Kameras des Sensorkopfs und der Verknüpfungskamera umfassen. Dieser Kanal kann beispielsweise durch eine RF-Verbindung realisiert sein, die wiederum einen im Sensorkopf oder in der Steuereinheit untergebrachten Sensor und einen in der Basiseinheit oder in oder an der Verknüpfungskamera platzierten Empfänger umfassen kann.

Die Verknüpfungskamera erlaubt es, eine Kalibrierung der verschiedenen Positionen des Sensorkopfes vorzunehmen, wobei es dazu genügt, wenn die Verknüpfungskamera mit den Aufnahmesequenzen des Sensorkopfs synchronisiert Aufnahmen der zu vermessenden Oberfläche macht, auf der die Verknüpfungskamera die gleichen Streifenmuster sieht, die daher als virtuelle Passmarken dienen können. Die Verknüpfungskamera muss also nicht die Bewegung des Sensorkopfs selbst aufnehmen. Eine vergleichbare Selbstkalibrierung durch virtuelle Passmarken ist in einem anderen Zusammenhang in der oben erwähnten Druckschrift DE 102 19 054 A1 beschrieben.

Eine entsprechende Weiterentwicklung des hier vorgeschlagenen Verfahrens, das sich mit einer Vorrichtung beschriebener Art durchführen lässt, sieht dementsprechend vor, dass aus ermittelten Konturen der einzelnen Teile der Oberfläche ein Gesamtbild der Oberfläche gewonnen wird durch Kalibrieren der verschiedenen Sensorkopfpositionen mittels der stationären, ebenfalls auf die Oberfläche gerichteten Verknüpfungskamera. Auslösungen der Verknüpfungskamera können dabei mit Auslösungen der Kameras des Sensorkopfes dadurch synchronisiert werden, dass Synchronisierungssignale drahtlos zwischen dem Sensorkopf und der Verknüpfungskamera ausgetauscht werden.

Alternativ kann ein Gesamtbild der Oberfläche auch durch ein so genanntes Matching oder Bildmatching von Teilbildern gewonnen werden, indem Teilbilder in Überlappungsbereichen auf Übereinstimmung einer dort ermittelten Oberflächenkontur hin ausgewertet werden. Dann ist eine stationäre Verknüpfungskamera nicht unbedingt erforderlich.

Ein besonders übersichtlicher Aufbau des Sensorkopfes ergibt sich, wenn die zwei Kameras des Sensorkopfes optische Achsen haben, die spiegelsymmetrisch zu einer Ebene angeordnet sind, in der die optische Achse des Projektionsobjektivs liegt. Um Beschattungen der Oberfläche weitestmöglich zu verhindern, können die optischen Achsen der Kameras und des Projektionsobjektivs wiederum in einer gemeinsamen Ebene liegen. In jedem Fall ist es im Blick auf eine gleich bleibende Kalibrierung innerer Parameter des Sensorkopfes vorteilhaft, wenn der Projektor und die Kameras feste Orientierungen relativ zueinander haben.

Ein Handbetrieb der Vorrichtung ist unkompliziert möglich, wenn die Kameras des Sensorkopfs einen objektseitigen Schnittweitenbereich aufweisen, der mindestens eine Schnittweite aus dem Intervall von 30 cm bis 50 cm umfasst. Bei Schnittweiten dieser Größenordnung lässt sich eine hinreichend helle Ausleuchtung der Oberfläche noch mit einem Projektor erreichen, der eine für einen Batterie- oder Akkubetrieb nicht zu hohe Strahlungsleistung hat. Dabei ist zu beachten, dass auch der Projektor aus dem genannten elektrochemischen Energiespeicher mit Energie zu versorgen ist, bei dem es sich insbesondere um eine Batterie oder einen Akku handeln kann.

Es kann vorgesehen sein, dass die Kameras des Sensorkopfs variable Optiken aufweisen, um verschiedene Schnittweiten und/oder Beobachtungswinkel zuzulassen. In diesem Fall kann auch der Projektor eine variable Optik aufweisen.

Der Projektor wird typischer Weise außer dem bildgebenden Element eine Lichtquelle aufweisen, wobei das bildgebende Element dann zum Intensitätsmodulieren von der Lichtquelle ausgehenden Lichts ausgeführt ist. Das bildgebende Element kann dabei transmissiv oder reflektierend ausgeführt sein. Insbesondere kann es sich bei dem bildgebenden Element um einen Mikrospiegel-Array oder um ein LCD, beispielsweise ein LCOS, handeln. Vorzugsweise kommt dabei eine Hochleistungs-LED als Lichtquelle zum Einsatz, die sich bei einer vergleichsweise hellen Strahlung durch einen geringen Leistungsbedarf auszeichnet, was im Hinblick auf die netzunabhängige Ausführung der Vorrichtung hilfreich ist.

Zusätzlich kann der Sensorkopf bei Weiterentwicklungen der Erfindung eine möglichst hoch auflösende Farbkamera zur Farbvermessung der Oberfläche aufweisen. Bei dem entsprechenden Verfahren kann dann zusätzlich zu einer Bildsequenz zur Erfassung von 3D-Daten jeweils auch eine Farbaufnahme mit der ebenfalls vom Sensorkopf umfassten Farbkamera gemacht und zur Farbvermessung und/oder Erfassung einer Textur der Oberfläche verwendet werden. Zur Ausleuchtung der Oberfläche für diese Farbaufnahme kann die Oberfläche für einen kurzen Zeitraum während der Aufnahmesequenz gleichmäßig ausgeleuchtet werden. Es ist aber auch möglich, dass sich eine gleichmäßige Ausleuchtung durch mehrere Streifenmuster aus der Sequenz ergibt, während derer die Farbaufnahme erfolgt.

Die hier beschriebene Vorrichtung kann programmtechnisch eingerichtet sein zum Ermitteln von räumlichen Koordinaten durch Triangulieren von mit Hilfe der aufprojizierten Muster identifizierten und mit den beiden Kameras des Sensorkopfs beobachteten Objektpunkten. Dazu kann auf an sich bekannte Verfahren zurückgegriffen werden. Möglich ist insbesondere eine Verwendung farbcodierter Muster oder Gray-Code-Muster, eventuell auch reduzierter, also mehrdeutiger, Gray-Code-Muster. Eine entsprechende Auswertung kann unter Umständen in der Steuereinheit vorgenommen werden, beispielsweise dann, wenn diese durch einen Laptop gegeben ist. Typischer ist eine Auswertung erfasster Daten in der Basiseinheit, die dann als Auswerteeinheit fungiert. Die Vorrichtung kann insbesondere programmtechnisch eingerichtet sein
- zum Generieren mindestens eines Streifenmusters auf dem bildgebenden Element,
- zum Ermitteln von Phasenwerten in Bildpunkten der beiden Kameras des Sensorskopfs,
- zum Identifizieren einander entsprechender Bildpunkte gleicher Phasenwerte durch Vergleich der Phasenwerte auf einander entsprechenden Epipolarlinien in Bildebenen der beiden Kameras und
- zum Triangulieren eines Objektpunkts auf Basis der diesem Objektpunkt entsprechenden, so identifizierten Bildpunkte.

Das erlaubt eine Nutzung der Epipolargeometrie, was ein Identifizieren einander entsprechender Bildpunkte in den Bildebenen der beiden Kameras des Sensorkopfs erleichtert und eine Erfassung der räumlichen Koordinaten der Oberfläche mit einer deutlich reduzierten Anzahl aufprojizierter Muster und einer dementsprechenden reduzierten Anzahl von Aufnahmen in jeder Sequenz ermöglicht.

Ein entsprechendes Verfahren unter Ausnutzung der Epipolargeometrie sieht dementsprechend vor, dass zum Identifizieren der einander entsprechenden Bildpunkte in den Bildebenen der beiden Kameras für jeweils eine Sensorkopfposition
- Phasenwerte der Streifenmuster für Bildpunkte in Bildebenen beider Kameras ermittelt werden,
- Paare einander jeweils entsprechender Epipolarlinien in den Bildebenen der beiden Kameras ausgewählt werden und
- die Phasenwerte auf den einander entsprechenden Epipolarlinien in den Bildebenen der beiden Kameras verglichen werden.

Ein fehlerfreies Identifizieren einander entsprechender Bildpunkte in den Bildebenen der beiden Kameras ist noch besser möglich, wenn dazu ferner
- die ermittelten Phasenwerte längs der Epipolarlinien auf Stetigkeit bewertet werden und
- die Epipolarlinien damit in Intervalle stetigen Phasenverlaufs eingeteilt werden, wonach
- einander entsprechende Intervalle in den einander entsprechenden Epipolarlinien identifiziert und
- innerhalb der einander entsprechenden Intervalle Punkte gleicher Phasenwerte einander zugeordnet werden.

Auch diese Verfahrensschritte lassen sich problemlos durch eine entsprechende Programmierung der Vorrichtung realisieren.

Ausführungsbeispiele der vorliegenden Erfindung werden nachfolgend anhand der Figuren 1 bis 5 beschrieben.

Es zeigt
- Fig. 1: eine Frontalansicht eines Sensorkopfs mit einer nur schematisch dargestellten Steuer- einheit in einer Ausführung der Erfindung,
- Fig. 2: in entsprechender Darstellung einer Weiter- entwicklung des Sensorkopfs aus Fig. 1,
- Fig. 3: eine schematische Darstellung einer voll- ständigen Vorrichtung in einer Ausführung der Erfindung,
- Fig. 4: eine vergleichbare Darstellung einer an- deren Ausführung der Erfindung und
- Fig. 5: eine schematische Darstellung für ein wei- teres Ausführungsbeispiel der Erfindung.

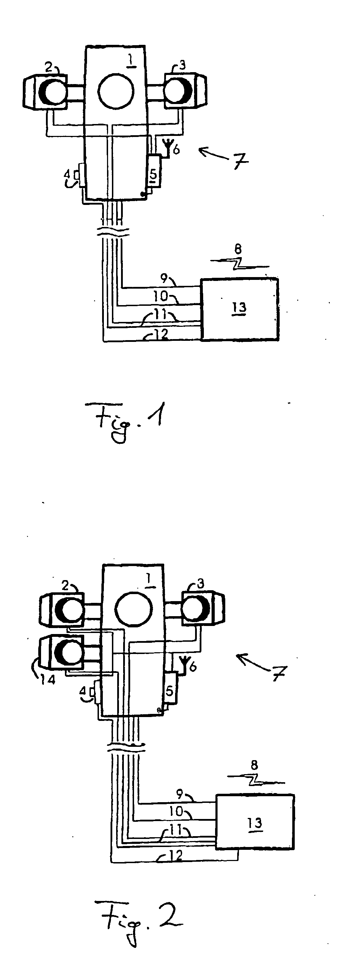

In Fig. 1 ist ein Sensorkopf 7 zu erkennen, der einen Projektor 1 sowie zwei symmetrisch zu diesem Projektor 1 angeordnete Kameras 2 und 3 aufweist. Der Projektor 1 wiederum umfasst ein in der Fig. 1 nicht erkennbares bildgebendes Element und ein Projektionsobjektiv zum Projizieren eines auf dem bildgebenden generierbaren änderbaren Musters auf eine zu vermessende Oberfläche. Bei dem bildgebenden Element handelt es sich um ein LCOS zum Intensitätsmodulieren von Licht, das von einer Lichtquelle des Projektors 1 ausgeht, bei der es sich um eine Hochleistungs-LED handelt. Bei anderen Ausführungen der Erfindung kann anstelle eines LCOS auch ein reflektierendes bildgebendes Element, beispielsweise ein Mikrospiegel-Array (DMD), vorgesehen sein. Die Kameras 2 und 3, die zur Beobachtung der zu vermessenden Oberfläche aus zwei unterschiedlichen Richtungen vorgesehen sind, sind für eine objektseitige Schnittweite von etwa 40 cm ausgelegt. Bei anderen Ausführungen der Erfindung können sowohl die Kameras 2 und 3 als auch der Projektor 1 mit variablen Optiken zu Ermöglichung variabler Objektschnittweiten ausgestattet sein.

Ebenfalls in Fig. 1 abgebildet ist eine Steuereinheit 13, die wie der als Handgerät ausgeführte Sensorkopf 7 als tragbares Gerät ausgeführt ist. Die Steuereinheit 13 umfasst Mittel zum Ansteuern des bildgebenden Elements des Projektors 1, zur Auslösung von mit dem aufprojizierten Muster synchronisierten Aufnahmen durch die zwei Kameras 2 und 3 und zur Verarbeitung von durch die Kameras 2 und 3 erzeugten Bilddaten. Ebenfalls in der Steuereinheit 13 untergebracht ist ein Akku als elektrochemischer Energiespeicher, der sowohl die Steuereinheit 13 als auch den Sensorkopf 7 versorgt.

Zwischen der Steuereinheit 13 und dem Sensorkopf 7 ist eine Kabelverbindung vorgesehen, die Stromversorgungsleitungen 10, Leitungen 9 zum Ansteuern des bildgebenden Elements, eine Leitungsverbindung 11 zum Übertragen von Kamerasignalen von den Kameras 2 und 3 zu der Steuereinheit 13 und zum Übertragen von Steuersignalen von der Steuereinheit 13 zu den Kameras 2 und 3 sowie Signalleitungen 12 zum Übertragen eines Auslösesignals an die Steuereinheit umfasst. Dabei ist die Steuereinheit 13 über ein DVI mit dem Sensorkopf 7 und dort mit dem Projektor 1 bzw. dem bildgebenden Element verbunden. Die Kameras 2 und 3 des Sensorkopfs 7 sind durch die Leitungsverbindung 11 über eine FireWire-Schnittstelle mit der Steuereinheit 13 verbunden. Außer der genannte Kabelverbindung zwischen der Steuereinheit 13 und dem Sensorkopf 7 ist keine Kabelverbindung des Sensorkopfs 7 oder der Steuereinheit 13 zu anderen Komponenten der Vorrichtung vorgesehen, insbesondere keine Kabelverbindung des Sensorkopfs 7 oder der Steuereinheit 13 zu weiteren, stationären Komponenten der Vorrichtung. Am Sensorkopf 7 ist ein Auslöser 4 angeordnet, mit dem eine Aufnahmesequenz ausgelöst werden kann. Ebenfalls am Sensorkopf 7 angebracht ist ein RF-Sender 5, mit einer Antenne 6, wobei der RF-Sender eine Synchronisationseinheit zum Synchronisieren von Aufnahmen der zwei Kameras 2 und 3 umfasst. Eine weitere Funktion des RF-Senders 5 mit der Antenne 6 wird weiter unten erläutert.

In Fig. 2 ist ein Sensorkopf 7 in einer anderen Ausführung der Erfindung gezeigt, wobei sich dieser Sensorkopf 7 von dem zuvor beschriebenen lediglich durch eine zusätzliche Farbkamera 14 zur Farbvermessung der zu erfassenden Oberfläche unterscheidet. Wiederkehrenden Merkmale sind hier wie auch in den folgenden Figuren mit den gleichen Bezugszeichen versehen.

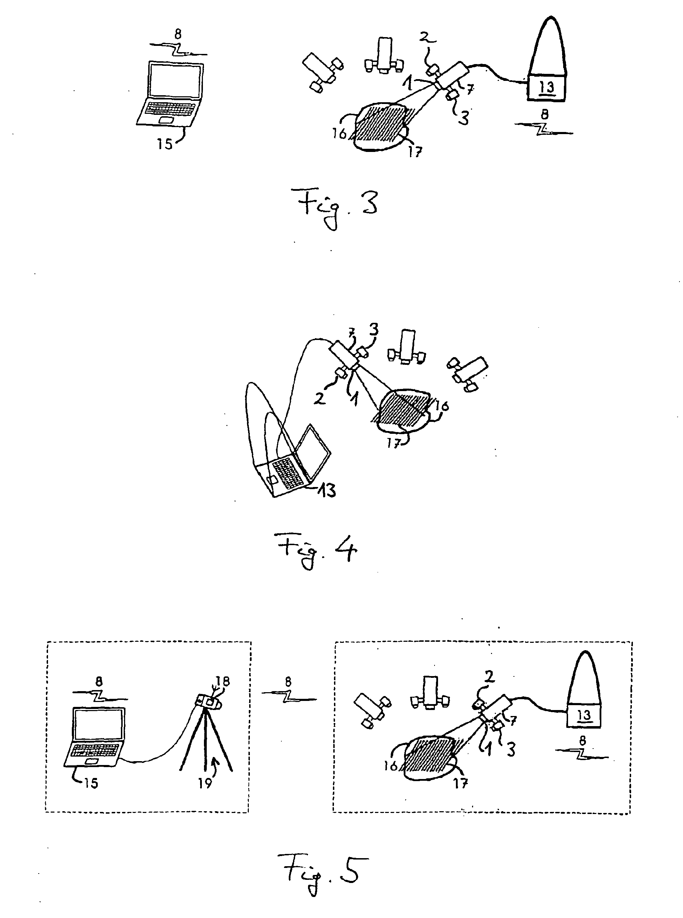

Eine vollständige Vorrichtung in einer typischen Ausführung der Erfindung ist in Fig. 3 gezeigt. Der Sensorkopf 7 aus einer der beiden vorherigen Figuren ist dort in drei verschiedenen Positionen für eine Rundumvermessung eines Objekts 16 abgebildet. Ebenfalls abgebildet ist die mit dem Sensorkopf verbundene Steuereinheit 13. Zusätzlich erkennbar ist eine von der Steuereinheit 13 und dem Sensorkopf 7 räumlich getrennte Basiseinheit 15, wobei Mittel für einen drahtlosen Datenaustausch zwischen der Basiseinheit 15 und der Steuereinheit 13 vorgesehen sind. Eine für diesen Datenaustausch vorgesehene Verbindung, bei der es sich zum Beispiel um eine WLAN-Verbindung handeln kann, ist hier durch ein Funksymbol 8 veranschaulicht. Die Mittel zum drahtlosen Datenaustausch umfassen insbesondere einen Kanal zum Transport von aus Kamerabildern der zwei Kameras 2 und 3 gewonnenen Daten. Diese Daten werden durch Vorverarbeitung und/oder Teilauswertung von Bilddaten der zwei Kameras 2 und 3 in der Steuereinheit 13 gewonnen.

Durch eine entsprechende Programmierung der Steuereinheit 13 und der Basiseinheit 15 ist die abgebildete Vorrichtung programmtechnisch eingerichtet zum Triangulieren von Objektpunkten auf dem Objekt 16 mittels der beiden Kameras 2 und 3 des Sensorkopfs 7 nach einem Identifizieren dieser Objektpunkte mit Hilfe aufprojizierter Streifenmuster 17.

Bei einem mit der Vorrichtung aus Fig. 3 durchgeführten Verfahren zum berührungslosen Erfassen räumlicher Koordinaten einer Oberfläche des Objekts 16 wird für jede Sensorkopfposition eine Sequenz verschiedener Streifenmuster 17 auf die Oberfläche aufprojiziert, wobei die mit den Streifenmustern 17 beleuchtete Oberfläche jeweils mit beiden Kameras 2 und 3 des handgeführten Sensorkopfs 7 aufgenommen wird. Mit Hilfe der aufprojizierten Streifemuster 17 werden dann einander bei dieser Sensorkopfposition entsprechende Bildpunkte in Bildebenen der beiden Kameras 2 und 3 identifiziert, worauf für eine Menge von Objektpunkten, die in einem bei der jeweiligen Sensorkopfposition erfassbaren Teil der Oberfläche dicht liegen, Tiefeninformationen auf Basis der den jeweiligen Objektpunkten entsprechenden, so identifizierten Bildpunkte in den Bildebenen der beiden Kameras 2 und 3 ermittelt werden.

Zum Auslösen einer Bildsequenz bei einer bestimmten Position des Sensorkopfs 7 wird dabei ein Auslösebefehl durch Drücken des Auslösers 4 vom Sensorkopf 7 an die Steuereinheit 13 übertragen. Die Steuereinheit 13 steuert daraufhin das bildgebende Element des Projektors 1 zur Bildung einer Sequenz von Streifenmustern 17 an, wobei die Steuereinheit 13 gleichzeitig Steuersignale an die Kameras 2 und 3 zum Auslösen von jeweils einer mit den Streifenmustern 17 synchronisierten Aufnahmesequenz abgibt. Dabei gewonnene Bilddaten werden dann von den Kameras 2 und 3 an die Steuereinrichtung 13 übergeben, wo die Bilddaten vorverarbeitet werden zur Bildung von Daten, die Phasenbilder des entsprechenden Teils der Oberfläche des Objekts 16 wiedergeben. Diese die Phasebilder wiedergebenden Daten, werden dann durch die Steuereinheit 13 mittels der genannten Mittel für den drahtlosen Datenaustausch drahtlos an die Basisstation 15 übermittelt, welche weitere Rechenschritte zum Identifizieren einander entsprechender Bildpunkte und zum Tiangulieren der Objektpunkte durchführt. Während einer Aufnahmesequenz, die nicht ganz 150 ms dauert, werden 8 bis 10 verschiedene Streifenmuster 17 auf das Objekt 16 projiziert, wobei von dem entsprechenden Teil der Oberfläche des Objekts 16 mit jedem dieser Streifenmuster 17 jeweils eine Aufnahme mit jeder der Kameras 2 und 3 gemacht wird.

Wie in Fig. 3 durch die verschiedenen Positionen des Sensorkopfs 7 angedeutet ist, werden verschiedene einander stellenweise überlappende Teile der Oberfläche des Objekts 16 von verschiedenen Sensorkopfpositionen aus aufgenommen. So ist eine Rundumvermessung des Objekts 16 möglich, wobei Teilbilder, die bei den einzelnen Sensorkopfpositionen gewonnen werden, beispielsweise durch Matching zu einem vollständigen O-berflächenbild des Objekts 16 ergänzt werden können.

Anders als der mobil- und netzunabhängig ausgeführte Sensorkopf 7 und die ebenfalls tragbare und netzunabhängige Steuereinheit 13 ist die Basiseinheit 15 bei dem in Fig. 3 abgebildeten Ausführungsbeispiel durch einen PC gegeben.

Eine andere Ausführung der Erfindung ist in Fig. 4 abgebildet. Hier ist die Steuereinheit 13 durch einen Laptop gegeben, der die Funktionen sowohl der Steuereinheit 13 als auch der Basiseinheit 15 aus dem Ausführungsbeispiel aus Fig. 3 übernimmt. Ein drahtloser Datenaustausch ist bei dieser Ausführung der Erfindung daher nicht erforderlich, weil eine vollständige Bearbeitung ermittelter Daten hier in der mobilen Steuereinheit 13 erfolgen kann. Eine vom Sensorkopf 7 oder der Steuereinheit 13 ausgehende drahtlose Datenübertragung ist hier nicht notwendig. In jedem Fall ist auch der hier als Steuereinheit 13 fungierende Laptop mobil und netzunabhängig. Das durchgeführte Verfahren kann bei einer Verwendung des Sensorkopfs aus Fig. 2 dadurch modifiziert werden, dass zusätzlich zu einer Aufnahmesequenz durch die Kameras 2 und 3 jeweils eine Farbaufnahme mit der Farbkamera 14 gemacht und zur Farbvermessung der Oberfläche verwendet wird. Das gilt nicht nur für die Vorrichtung aus Fig. 4, sondern auch für die anderen hier beschriebenen Vorrichtungen.

Eine weitere Ausführung der Erfindung ist schließlich in Fig. 5 gezeigt. Gegenüber dem Ausführungsbeispiel aus Fig. 3 weist die hier gezeigte Vorrichtung zusätzlich eine mit der Basiseinheit 15 verbundene stationäre Verknüpfungskamera 19 auf, wobei die Mittel zum drahtlosen Datenaustausch hier auch einen Kanal zum Transport von Steuersignalen zum Synchronisieren von Auslösungen der zwei Kameras 2 und 3 des Sensorkopfs einerseits und der Verknüpfungskamera 19 andererseits umfassen. Dieser Kanal wird realisiert durch den im Zusammenhang mit Fig. 1 erwähnten RF-Sender 5 mit der Antenne 6 und durch einen entsprechenden Empfänger 18, der an der Verknüpfungskamera angeordnet ist.

Fig. 5 zeigt dabei skizzenhaft ein mögliches Multi-View-Einsatzszenario des Sensorkopfs 7 und der Steuereinheit 13. Dabei werden durch die Verknüpfungskamera 19, die per Funk mit dem Sensorkopf 7 synchronisiert ist, mit Methoden der Selbstkalibrierung, genauer durch virtuelle Passmarken, mehrere Ansichten des Objekts 16 zu einer Rundumvermessung kombiniert.

Bei einem entsprechenden Verfahren werden also wieder verschiedene, einander nur stellenweise überlappende Teile der Oberfläche des Objekts 16 von verschiedenen Sensorkopfpositionen aus aufgenommen. Dabei wird aus ermittelten Konturen der einzelnen Teile der Oberfläche ein Gesamtbild der Oberfläche gewonnen durch Kalibrieren der verschiedenen Sensorkopfpositionen mittels der stationären, ebenfalls auf die Oberfläche des Objekts 16 gerichteten Verknüpfungskamera 19.

Um einen verwacklungsfreien Handbetrieb des Sensorkopfs 7 zu ermöglichen, sollte die für eine Aufnahmesequenz benötigte Zeit möglichst kurz gehalten werden. Das beschränkt die Anzahl der von einer Sequenz umfassten Streifenmuster 17. Um mit einer geringeren Anzahl von Streifenmustern 17 und einer dementsprechend geringen Anzahl von Aufnahmen auszukommen, kann nutzbringend von der Epipolargeometrie Gebrauch gemacht werden. Eine entsprechende Ausführung des Verfahrens, die sich durch eine entsprechende programmtechnische Einrichtung der Vorrichtung realisieren lässt, sieht dazu vor, dass zum Identifizieren der einander entsprechenden Bildpunkte in den Bildebenen der beiden Kameras 2 und 3 für jeweils eine Position des Sensorkopfs 7
- Phasenwerte der Streifenmuster 17 für Bildpunkte in Bildebenen beider Kameras 2 und 3 ermittelt werden,
- Paare einander jeweils entsprechende Epipolarlinien in den Bildebenen der beiden Kameras 2 und 3 ausgewählt werden und
- die Phasenwerte auf den einander entsprechenden Epipolarlinien in den Bildebenen der beiden Kameras verglichen werden.

Unter Umständen genügt dann eine geringe Zahl aufprojizierter Streifenmuster 17, die sich zum Beispiel nur durch eine Phasenverschiebung voneinander unterscheiden. Eine Weiterentwicklung dieses Verfahrens sieht vor, dass zum Identifizieren der einander entsprechenden Bildpunkte ferner
- die ermittelten Phasenwerte längs der Epipolarlinien auf Stetigkeit bewertet werden und
- die Epipolarlinien damit in Intervalle stetigen Phasenverlaufs eingeteilt werden,
- wonach einander entsprechende Intervalle in den einander entsprechenden Epipolarlinien identifiziert und
- innerhalb der einander entsprechenden Intervalle Punkte gleicher Phasenwerte einander zugeordnet werden.

Das Problem des Aufsuchens einander entsprechender Bildpunkte in den Bildebenen der beiden Kameras wird dadurch für jedes Epipolarlinienpaar auf ein eindimensionales Problem reduziert, wobei durch die zuletzt genannten Maßnahmen ein Identifizieren auch bei Unstetigkeiten, die durch Höhensprünge verursacht werden, problemlos möglich ist. Die für dieses Verfahren als bekannt vorauszusetzenden Epipolarlinienpaare ergeben sich dabei eindeutig aus der inneren Geometrie des Sensorkopfs 7.

Die Ausführung aus Fig. 5 kann schließlich dahingehend erweitert werden, dass nicht nur eine stationär Verknüpfungskamera 19, sondern mehrere derartige Verknüpfungskameras 19 verwendet werden.

Eine vorteilhafte schnelle Projektion von Mustersequenzen und eine entsprechend schnelle Bildaufnahme kann nicht nur, wie hier beschrieben, durch Nutzung der Epipolargeometrie, sondern auch durch andere angepasste Projektionsmuster zur Gewinnung von Phasenwerten erreicht werden, beispielsweise durch reduzierte Graycodes, Farbcodes, einfache Sinusmuster und Auswertung mittels räumlicher Phasenschiebeverfahren sowie Moiré-Verfahren. Ebenfalls möglich ist ein Rückgriff auf fotogrammetrische Verfahren, beispielsweise unter Verwendung von Ringmustern oder Punktmustern anstelle der bis lang diskutierten Streifenmuster.

Durch eine Verwendung variabler Optiken lässt sich nicht nur eine einstellbare Objektschnittweite, sondern auch eine variable Messfeldausdehnung realisieren.

Eine Rundumvermessung (Multi-View-Messung) kann durch verschiedene Konzepte realisiert werden, beispielsweise durch Bildmatching, eine Verwendung von virtuellen oder reellen Passmarken oder andere Formen der Selbstkalibrierung.

Ein Einsatz der hier beschriebenen Vorrichtung ist unabhängig von externen Stromnetzen möglich. Das eröffnet neue Einsatzmöglichkeiten, beispielsweise bei einer dreidimensionalen Tatortaufnahme in der Kriminalistik oder bei einer dreidimensionalen Aufnahme archäologischer Fundstellen. Bislang bekannte 3D-Scanner sind dafür nicht geeignet, weil die dort zur Anwendung kommenden Musterprojektoren einen Stromanschluss benötigen. Bei herkömmlichen Anwendungen von Streifenprojektionen zur Erfassung räumlicher Oberflächenkoordinaten kommen immer Sensorfixierungen oder Objektfixierungen, beispielsweise durch Stative, zum Einsatz, wobei gleichzeitig eine Anbindung an ein Stromnetz notwendig ist. Herkömmliche drahtlose Kameras dagegen sind für eine vergleichbare manuelle Oberflächenvermessung nicht geeignet, weil sie aufgrund von Bandbreitenbegrenzungen keine Bilddatenübertragung in der nötigen Auflösung bei Bildraten von größenordnungsmäßig 60 Hz erreichen.

Mit der hier vorgestellten Vorrichtung dagegen wird eine Oberflächenvermessung mit einem handgeführten Sensor 7 realisiert, der keine Kabelanbindung an stationäre Komponenten benötigt und mit dem insbesondere Mult-View-Messungen ohne Marker oder Tracking möglich sind.

Mit der hier beschriebenen Erfindung wurde also ein 3D-Sensor auf Basis eines miniaturisierten digitalen Akku-betriebenen Projektors 1 und mehrerer digitaler Kameras (2, 3 und optional 14) entwickelt, welche den Aufbau eines kompakten Sensorkopfes 7 ermöglichen. Mit diesem System kann ein Objekt 16 mit Hilfe einer Sequenz mehrerer Streifenmuster 17 flexibel vermessen werden. Die Steuerung und die Stromversorgung des Sensorkopfes erfolgen dabei über einen Kabelstrang (DVI 9, Strom 10, FireWire 11 und Sequenzauslösung 12) durch eine Kontroll-Einheit oder Steuereinheit 13. Diese Einheit (zum Beispiel ein eingebettetes System bzw. ein Notebook nebst Akkumulator) wird vom Bediener körpernah (zum Beispiel in einem Rucksack) getragen oder kann auch im Griffstück des Sensorkopfes untergebracht werden. Insbesondere wenn die Kontrolleinheit am Körper unabhängig vom Sensorkopf 7 getragen wird, kann das Gewicht des Sensorkopfes gering gehalten werden, was ermüdungsfreies Arbeiten und ruhige Handhabung ermöglicht. Eine Streifensequenz wird verwacklungsfrei durch einen Auslöser 4 mit Verzögerung ausgelöst. Um die der 3D-Koordinatenberechnung zugrundeliegenden Phasenwerte mittels der zum Einsatz kommenden Streifenprojektion unter Nutzung eines handgeführten Sensors ermitteln zu können, muss die Projektion und Bildaufnahme aller nötigen Bilder einer Sequenz in weniger als 150 ms abgeschlossen werden. Dies kann zum einen durch Synchronisation aller Kameras mit dem zur Projektion genutzten digitalen Projektor realisiert werden (Sendung über RF-Sender 5 und RF-Antenne 6, Empfang über als Synchronisationseinheit dienenden Empfänger 18). Zum anderen beträgt die Bild-, Projektions- und Aufnahmerate mindestens 60Hz. Damit stehen für die Musterprojektion wenigstens neun Muster zur Verfügung. Diese geringe Anzahl von Mustern reicht jedoch unter Nutzung des vorkalibrierten Sensorkopfes 7 aus, um eine 3D-Ansicht des vermessenen Objektes zu erzielen. Die Daten- und Synchronisationsübertragung zu einer Basiseinheit 15, welche optional weitere objektfeste Verknüpfungskameras 19 steuern kann und weiterführende Berechnungs- und Auswerteschritte durchführt, erfolgt per Funk, veranschaulicht durch das Symbol mit dem Bezugszeichen 8.

Als Grundlage für die 3D-Vermessung können unterschiedliche Kodierungs- und Auswerteverfahren verwendet werden (zum Beispiel Nutzung der Epipolargeometrie, farbcodierte Muster, reduzierte Gray-Code-Muster).

Mit der vorliegenden Erfindung lässt sich ein kompakter, flexibel einsetzbarer optischer 3D-Sensor realisieren. Handgeführtes 3D-Scannen wird durch den leichten Sensorkopf in Verbindung mit einer kurzen Streifensequenz, die mit einer Frequenz von mindestens 60 Hz projiziert und aufgenommen wird, ermöglicht. Stromversorgung und Steuerung des Sensorkopfes 7 wird durch eine tragbare Kontrolleinheit oder Steuereinheit 13 ermöglicht, welche Daten- und Synchronisationssignale drahtlos an eine Basisstation weiterleitet. Somit können sehr kurze Aufbau- und Messzeiten realisiert werden, welche durch den hochgradig mobilen Charakter des Systems zum Beispiel Vor-Ort- bzw. Außendienstmessungen gestattet. Derartig vollautarke 3D-Messsysteme sind bisher nicht bekannt.

Auf der Grundlage diese Konzeptes eines tragbaren, netzunabhängigen, handgeführten 3D-Sensors für 3D-Vermessung können unterschiedliche Systemrealisierungen gestaltet werden. Den prinzipiellen Aufbau der mobilen Sensoreinheit (Sensorkopf 7) zeigt Fig. 1, eine Variante mit Nutzung einer zusätzlichen, höher auflösenden Farbkamera 14 zeigt Fig. 2. In Fig. 3 ist eine Systemkonfiguration bestehend aus dem mobilen 3D-Sensor (keine Anbindung an ein Stromnetz) und einer über Funk angebundenen mobilen oder stationären PC-/Laptop-Basisstaton gezeigt. Ein alternatives Verwendungskonzept, bei welchem auch die Basisstation mobil als Notebook und mit der Steuereinheit 13 identisch ausgeführt ist, wobei dieser durch eine Haltevorrichtung am Körper des Bedieners getragen werden kann, zeigt Fig. 4. Hier kann die Funkverbindung entfallen und die Basisstation (Laptop) direkt an den 3D-Sensorkopf angebunden werden. Eine Verbindung zu einem Stromnetz ist auch hier nicht erforderlich. Eine mögliche Realisierung mit mobilem 3D-Sensor mit drahtloser Kommunikation zwischen 3D-Sensorkopf und Basisstation und zusätzlicher Verknüpfungskamera 19 zur Rundumvermessung mit Selbstkalibrierung zeigt Fig. 5.

Bei einem optischen Sensor zur 3D-Vermessung auf Basis von Streifenprojektion, bestehend aus einem Sensorkopf, aufgebaut aus einem digitalen Projektor 1 und mehreren digitalen Kameras (2, 3 und optional 14), und einer mobilen Kontrolleinheit oder Steuereinheit 13, wird also gemäß der Erfindung eine handgeführte, kabellose 3D-Vermessung ermöglicht, indem eine kurze Streifensequenz getaktet durch eine spezielle Synchronisationseinrichtung (5, 6 und 18) von allen Kameras im Bildtakt des Projektors aufgenommen wird. Durch die Verwendung eines vom Sensorkopf 7 getrennten eingebetteten Systems (Steuereinheit 13) kann das Gewicht reduziert werden und trotzdem Stromversorgung und Kamerasteuerung am Körper realisiert werden. Dies ermöglicht den Verzicht auf jegliche Kabel vom Sensorkopf zum Auswerterechner der Basisstation 25. Dazu trägt die Vorverarbeitung der Messdaten vor der Funkübertragung bei.

Die hier vorgeschlagene Vorrichtung ist in ihren verschiedenen Ausführungen jeweils dazu vorgesehen, dass durch eine entsprechende Ansteuerung des bildgebenden Elements ein zweidimensionales Muster, vorzugsweise ein Streifenmuster, durch den Projektor auf die zu vermessende Oberfläche projiziert wird. Die räumlichen Koordinaten der Oberfläche können dann mit Hilfe der mindestens einen Kamera durch Triangulieren erfasst werden, wobei das aufprojizierte Muster oder mehrere aufprojizierte Muster zum Identifizieren von Punkten auf der Oberfläche dienen. Dabei muss die mindestens eine Kamera selbst nicht als distanzmessendes Gerät ausgeführt sein - insbesondere ist eine Abstands- oder Entfernungsbestimmung durch direkte oder indirekte Laufzeitmessungen nicht erforderlich und typischerweise nicht vorgesehen.

Wenn die Vorrichtungen zwei Kameras umfasst, kann ein Punkt auf der Oberfläche in vorteilhafter Weise dadurch trianguliert werden, dass einander entsprechende Bildpunkte in den Bildebenen der beiden Kameras identifiziert werden und ein Abstand zwischen den beiden Kameras als Triangulationsbasis verwendet wird.

Eine Änderung einer aktuellen Position des als Handgerät ausgeführten Sensorkopfs kann mittels eines Auswertealgorithmus durch Auswerten von sich mit einer solchen Positionsänderung ebenfalls ändernden Bilddaten erfasst und berücksichtigt werden. Alternativ oder zusätzlich kann dazu eine weitere, gegenüber der zu vermessenden Oberfläche ortsfeste Kamera vorgesehen sein, die ebenfalls auf diese Oberfläche gerichtet sein kann und die Postion des Sensorkopfes aus dem dort aufprojizierten Muster erschließen kann.

## Patentansprüche

1. Vorrichtung zum berührungslosen Erfassen räumlicher Koordinaten einer Oberfläche, umfassend einen Sensorkopf (7) und eine mit dem Sensorkopf (7) verbundene, räumlich vom Sensorkopf (7) getrennte Steuereinheit (13),
wobei der Sensorkopf (7) als tragbares Handgerät ausgeführt ist und einen Projektor (1) mit einer Lichtquelle sowie mindestens eine Kamera (2, 3) zur Beobachtung der Oberfläche umfasst und wobei die Steuereinheit (13) Mittel zur Verarbeitung von durch die mindestens eine Kamera (2, 3) erzeugten Bilddaten umfasst,
**dadurch gekennzeichnet,**
**dass** der Projektor (1) ein transmissiv oder reflektierend ausgeführtes bildgebendes Element zum Intensitätsmodulieren von der Lichtquelle ausgehenden Lichts und ein Projektionsobjektiv zum Projizieren eines auf dem bildgebenden Element generierbaren änderbaren Musters auf die Oberfläche aufweist,
wobei die Steuereinheit (13) ebenfalls als tragbares Gerät ausgeführt ist und Mittel zum Ansteuern des bildgebenden Elements und zur Auslösung von Aufnahmen durch die mindestens eine Kamera (2, 3) umfasst,
wobei ferner in der Steuereinheit (13) ein elektrochemischer Energiespeicher für eine Energieversorgung des Sensorkopfs (7) und der Steuereinheit (13) untergebracht ist
und wobei zwischen dem Sensorkopf (7) und der Steuereinheit (13) eine Kabelverbindung vorgesehen ist, die Stromversorgungsleitungen (10), Leitungen (9) zum Ansteuern des bildgebenden Elements, eine Leitungsverbindung (11) zum Übertragen von Kamerasignalen von der mindestens einen Kamera (2, 3) zur Steuereinheit und zum Übermitteln von Steuersignalen von der Steuereinheit (13) zu der mindestens einen Kamera (2, 3) sowie Signalleitungen (12) zum Übertragen eines Auslösesignals an die Steuereinheit (13) umfasst und keine Kabelverbindung des Sensorkopfes (7) oder der Steuereinheit (13) zu weiteren, stationären Komponenten der Vorrichtung vorgesehen ist.

2. Vorrichtung nach Anspruch 1, **dadurch gekennzeichnet, dass** der Sensorkopf (7) zwei Kameras (2, 3) zur Beobachtung der Oberfläche aus zwei unterschiedlichen Richtungen umfasst.

3. Vorrichtung nach einem der Ansprüche 1 oder 2, **dadurch gekennzeichnet, dass** die mindestens eine Kamera (2, 3) des Sensorkopfs (7) über eine FireWire-Schnittstelle oder eine USB-Schnittstelle mit der Steuereinheit (13) verbunden ist.

4. Vorrichtung nach einem der Ansprüche 1 bis 3, **dadurch gekennzeichnet, dass** sie ferner eine von der Steuereinheit (13) und dem Sensorkopf (7) räumlich getrennte Basiseinheit (15) umfasst, wobei Mittel für einen drahtlosen Datenaustausch zwischen der Basiseinheit (15) und der Steuereinheit (13) oder dem Sensorkopf (7) vorgesehen sind, die einen Kanal zum Transport von aus Kamerabildern der mindestens einen Kamera (2, 3) gewonnenen Daten umfassen.

5. Vorrichtung nach Anspruch 4, **dadurch gekennzeichnet, dass** die genannten Daten aus Bilddaten der mindestens einen Kamera (2, 3) durch Vorverarbeitung und/oder Teilauswertung in der Steuereinheit (13) gewonnene Daten sind.

6. Vorrichtung nach einem der Ansprüche 4 oder 5, **dadurch gekennzeichnet, dass** sie eine mit der Basiseinheit (15) verbundene stationäre Verknüpfungskamera (19) umfasst, wobei die Mittel zum drahtlosen Datenaustausch einen Kanal zum Transport von Steuersignalen zum Synchronisieren von Auslösungen der mindestens einen Kamera (2, 3) des Sensorkopfs (7) und der Verknüpfungskamera (19) umfassen.

7. Vorrichtung nach einem der Ansprüche 1 bis 6, **dadurch gekennzeichnet, dass** die mindestens eine Kamera (2, 3) des Sensorkopfs (7) einen objektseitigen Schnittweitenbereich aufweist, der mindestens eine Schnittweite aus dem Intervall von 30 cm bis 50 cm umfasst.

8. Vorrichtung nach einem der Ansprüche 1 bis 7, **dadurch gekennzeichnet, dass** die mindestens eine Kamera (2, 3) des Sensorkopfs (7) eine variable Optik aufweist.

9. Vorrichtung nach einem der Ansprüche 1 bis 8, **dadurch gekennzeichnet, dass** sie programmtechnisch eingerichtet ist zum Triangulieren von mit Hilfe der aufprojizierten Muster identifizierten und mit der mindestens einen Kamera (2, 3) des Sensorkopfs (7) beobachteten Objektpunkten,
wobei entweder
(a) der Sensorkopf (7) zwei Kameras (2, 3) zur Beobachtung der Oberfläche aus zwei unterschiedlichen Richtungen umfasst und die Vorrichtung programmtechnisch eingerichtet ist
- zum Generieren mindestens eines Streifenmusters (17) auf dem bildgebenden Element,
- zum Ermitteln von Phasenwerten in Bildpunkten der beiden Kameras (2, 3) des Sensorkopfs (7),
- zum Identifizieren einander entsprechender Bildpunkte gleicher Phasenwerte durch Vergleich der Phasenwerte auf einander entsprechenden Epipolarlinien in Bildebenen der beiden Kameras (2, 3) und
- zum Triangulieren eines Objektpunkts auf Basis der diesem Objektpunkt entsprechenden, so identifizierten Bildpunkte
oder
(b) die Vorrichtung programmtechnisch eingerichtet ist
- zum Generieren mindestens eines Streifenmusters (17) auf dem bildgebenden Element,
- zum Ermitteln von Phasenwerten in Bildpunkten der Kamera (2) des Sensorkopfs (7),
- zum Identifizieren einander entsprechender Punkte in einer Bildebene der Kamera (2) und auf dem bildgebenden Element durch Vergleich der Phasenwerte auf einander entsprechenden Epipolarlinien in der Bildebene der Kamera (2) und auf dem bildgebenden Element und
- zum Triangulieren eines Objektpunkts auf Basis der diesem Objektpunkt entsprechenden, so identifizierten Punkte.

10. Verfahren zum berührungslosen Erfassen räumlicher Koordinaten einer Oberfläche mittels einer Vorrichtung nach einem der Ansprüche 1 bis 9, umfassend folgende Schritte:
- Aufprojizieren verschiedener Streifenmuster (17) auf die Oberfläche und Aufnehmen der mit den Streifenmustern beleuchteten Oberfläche mittels des Projektors (1) und der mindestens einen Kamera (2, 3) des handgeführten Sensorkopfs (7),
- Identifizieren einander entsprechender Bildpunkte in Bildebenen der beiden Kameras (2, 3) oder einander entsprechende Punkte in der Bildebene der Kamera (2) und auf dem bildgebenden Element mittels der aufprojizierten Streifenmuster (17) und
- Ermitteln von Tiefeninformationen für Objektpunkte durch Triangulieren auf Basis der den jeweiligen Objektpunkten entsprechenden, so identifizierten Bildpunkte oder Punkte.

11. Verfahren nach Anspruch 10, **dadurch gekennzeichnet, dass**
- zum Aufnehmen einer Bildsequenz ein Auslösebefehl vom Sensorkopf (7) an die Steuereinheit (13) übertragen wird und
- durch die Steuereinheit (13) das bildgebende Element zur Bildung einer Sequenz von Streifenmustern (17) angesteuert wird und Steuersignale an die mindestens eine Kamera (2, 3) gegeben werden zum Auslösen jeweils einer Aufnahmesequenz, wobei
- so gewonnene Bilddaten von der mindestene einen Kamera (2, 3) an die Steuereinrichtung (13) übergeben werden, wo die Bilddaten vorverarbeitet werden zur Bildung Phasenbilder wiedergebender Daten, und
- die Phasenbilder wiedergebenden Daten durch die Steuereinheit (13) drahtlos an eine Basisstation (15) übermittelt werden, welche weitere Rechenschritte zum Identifizieren einander entsprechender Bildpunkte und zum Triangulieren der Objektpunkte durchführt.

12. Verfahren nach Anspruch 11, **dadurch gekennzeichnet, dass** die Aufnahmesequenz höchstens 150 ms dauert und/oder acht bis zehn Aufnahmen durch mindestens eine Kamera (2, 3) oder jede der zwei Kameras (2, 3) umfasst.

13. Verfahren nach einem der Ansprüche 10 oder 12, **dadurch gekennzeichnet, dass** verschiedene, einander stellenweise überlappende Teile der Oberfläche von verschiedenen Sensorkopfpositionen aus aufgenommen werden, wobei aus ermittelten Konturen der einzelnen Teile der Oberfläche ein Gesamtbild der Oberfläche gewonnen wird durch Kalibrieren der verschiedenen Sensorkopfpositionen mittels mindestens einer stationären, ebenfalls auf die Oberfläche gerichteten Verknüpfungskamera (19) und wobei Auslösungen der Verknüpfungskamera (19) mit Auslösungen der mindestens einen Kamera (2, 3) des Sensorkopfes (7) synchronisiert werden durch einen drahtlosen Datenaustausch zwischen dem Sensorkopf (7) und der Verknüpfungskamera (19).

14. Verfahren nach einem der Ansprüche 10 bis 13, **dadurch gekennzeichnet, dass** zum Identifizieren der einander entsprechenden Bildpunkte in den Bildebenen zweier Kameras (2, 3) des Sensorkopfs für jeweils eine Sensorkopfposition
- Phasenwerte der Streifenmuster (17) für Bildpunkte in Bildebenen der zwei Kameras (2, 3) ermittelt werden,
- Paare einander jeweils entsprechender Epipolarlinien in den Bildebenen der beiden Kameras (2, 3) ausgewählt werden und
- Die Phasenwerte auf den einander entsprechenden Epipolarlinien in den Bildebenen der beiden Kameras (2, 3) verglichen werden.

15. Verfahren nach einem der Ansprüche 10 bis 13, **dadurch gekennzeichnet, dass** zum Identifizieren der einander entsprechenden Punkte in der Bildebene der Kamera (2) und auf dem bildgebenden Element für jeweils eine Sensorkopfposition
- Phasenwerte der Streifenmuster (17) für Bildpunkte in einer Bildebene der Kamera (2) des Sensorkopfs (7) ermittelt werden,
- Paare einander jeweils entsprechender Epipolarlinien in der Bildebene der Kamera (2) und auf dem bildgebenden Element ausgewählt werden und
- Die Phasenwerte auf den einander entsprechenden Epipolarlinien in der Bildebenen der Kamera (2) und auf dem bildgebenden Element verglichen werden.

## Claims

1. Device for non-contact recording of spatial coordinates of a surface, comprising a sensor head (7) and a control unit (13) connected to the sensor head (7) and separated spatially from the sensor head (7),
the sensor head (7) being designed as a portable handheld device and comprising a projector (1) with a light source and at least one camera (2, 3) for observing the surface
and the control unit (13) comprising means for processing image data produced by the at least one camera (2, 3),
**characterised**
**in that** the projector (1) has an imaging element designed to be transmissive or reflective for intensity modulation of the light emanating from the light source and a projection lens for projecting a variable pattern, which can be generated on the imaging element, onto the surface,
the control unit (13) likewise being designed as a portable device and comprising means for actuating the imaging element and for triggering recordings by the at least one camera (2, 3),
furthermore an electrochemical energy store for an energy supply of the sensor head (7) and the control unit (13) being accommodated in the control unit (13) and a cable connection being provided between the sensor head (7) and the control unit (13), which cable connection comprises current supply lines (10), lines (9) for actuating the imaging element, a line connection (11) for transmitting camera signals from the at least one camera (2, 3) to the control unit and for transmitting control signals from the control unit (13) to the at least one camera (2, 3) and also signal lines (12) for transmitting a trigger signal to the control unit (13) and no cable connection of the sensor head (7) or of the control unit (13) to further, stationary components of the device being provided.

2. Device according to Claim 1, **characterised in that** the sensor head (7) comprises two cameras (2, 3) for observing the surface from two different directions.

3. Device according to one of Claim 1 and 2,
**characterised in that** the at least one camera (2, 3) of the sensor head (7) is connected to the control unit (13) via one of a FireWire interface or a USB interface.

4. Device according to one of Claims 1 to 3,
**characterised in that** it further comprises a base unit (15) separated spatially from the control unit (13) and the sensor head (7),
means for a wireless data exchange between the base unit (15) and the control unit (13) or the sensor head (7) being provided, which means comprise a channel for transport of data obtained from camera images of the at least one camera (2, 3).

5. Device according to Claim 4, **characterised in that** the said data is data obtained from image data of the at least one camera (2, 3) by pre-processing and/or partial evaluation in the control unit (13).

6. Device according to one of Claim 4 and 5,
**characterised in that** it comprises a stationary linking camera (19) connected to the base unit (15), the means for wireless data exchange comprising a channel for transport of control signals in order to synchronise triggering of the at least one camera (2, 3) of the sensor head (7) and of the linking camera (19).

7. Device according to one of Claims 1 to 6,
**characterised in that** the at least one camera (2, 3) of the sensor head (7) has an object-side focal intercept range which comprises at least one focal intercept from the range of 30 cm to 50 cm.

8. Device according to one of Claims 1 to 7, **characterised in that** the at least one camera (2, 3) of the sensor head (7) has a variable lens system.

9. Device according to one of Claims 1 to 8,
**characterised in that** it is set up in terms of programming for triangulating object points which are identified with the help of the patterns projected on and observed with the at least one camera (2, 3) of the sensor head (7),
either
(a) the sensor head (7) comprising two cameras (2, 3) for observing the surface from two different directions and the device being set up in terms of programming
- for generating at least one stripe pattern (17) on the imaging element,
- for determining phase values in image points of the two cameras (2, 3) of the sensor head (7),
- for identifying mutually corresponding image points of the same phase values by comparing the phase values on mutually corresponding epipolar lines in image planes of the two cameras (2, 3) and
- for triangulating an object point on the basis of the thus identified image points corresponding to this object point
or
(b) the device being set up in terms of programming
- for generating at least one stripe pattern (17) on the imaging element,
- for determining phase values in image points of the camera (2) of the sensor head (7),
- for identifying mutually corresponding points in one image plane of the camera (2) and on the imaging element by comparing the phase values on mutually corresponding epipolar lines in the image plane of the camera (2) and on the imaging element and
- for triangulating an object point on the basis of the thus identified points corresponding to this object point.

10. Method for non-contact recording of spatial coordinates of a surface by means of a device according to one of Claims 1 to 9, comprising the following steps:
- projecting various stripe patterns (17) onto the surface and recording the surface illuminated with the stripe patterns by means of the projector (1) and the at least one camera (2, 3) of the hand-guided sensor head (7),
- identifying mutually corresponding image points in image planes of the two cameras (2, 3) or mutually corresponding points in the image plane of the camera (2) and on the imaging element by means of the stripe patterns (17) projected on and
- determining depth information for object points by triangulation on the basis of the thus identified image points or points corresponding to the respective object points.

11. Method according to Claim 10, **characterised in that**
- a trigger command is transmitted from the sensor head (7) to the control unit (13) to record an image sequence and
- the imaging element is actuated by the control unit (13) to form a sequence of stripe patterns (17) and control signals are transmitted to the at least one camera (2, 3) to trigger respectively one recording sequence,
- thus obtained image data being transmitted from the at least one camera (2, 3) to the control device (13), where the image data are pre-processed to form data reproducing phase images, and
- data reproducing the phase images being transmitted by the control unit (13) wirelessly to a base station (15) which carries out further calculation steps for identifying mutually corresponding image points and for triangulating the object points.

12. Method according to Claim 11, **characterised in that** the recording sequence lasts at most 150 ms and/or comprises eight to ten recordings by at least one camera (2, 3) or each of the two cameras (2, 3).

13. Method according to one of Claim 10 and 12, **characterised in that** various parts of the surface, which mutually overlap in places, are recorded from various sensor head positions, a total image of the surface being obtained from determined contours of the individual parts of the surface by calibration of the various sensor head positions using at least one stationary linking camera (19) which is likewise directed towards the surface, and triggering of the linking camera (19) being synchronised with triggering of the at least one camera (2, 3) of the sensor head (7) by a wireless data exchange between the sensor head (7) and the linking camera (19).

14. Method according to one of Claims 10 to 13, **characterised in that**, for identifying the mutually corresponding image points in the image planes of two cameras (2, 3) of the sensor head for respectively one sensor head position,
- phase values of the stripe patterns (17) for image points in image planes of the two cameras (2, 3) are determined,
- pairs of respectively mutually corresponding epipolar lines in the image planes of the two camera (2, 3) are selected and
- the phase values on the mutually corresponding epipolar lines in the image planes of the two cameras (2, 3) are compared.

15. Method according to one of Claims 10 to 13, **characterised in that**, for identifying the mutually corresponding points in the image plane of the camera (2) and on the imaging element for respectively one sensor head position,
- phase values of the stripe patterns (17) for image points in an image plane of the camera (2) of the sensor head (7) are determined,
- pairs of respectively mutually corresponding epipolar lines in the image plane of the camera (2) and on the imaging element are selected, and
- the phase values on the mutually corresponding epipolar lines in the image planes of the camera (2) and on the imaging element are compared.

## Revendications

1. Dispositif permettant la mesure sans contact des coordonnées spatiales d'une surface donnée, comprenant une tête de mesure (7) et une unité de commande (13) liée à la tête de mesure (7), mais séparée spatialement d'elle,
où la tête de mesure (7) est un dispositif portatif comprenant un projecteur (1) muni d'une source lumineuse ainsi qu'au moins une caméra (2, 3) pour observer la surface et où l'unité de commande (13) comporte des moyens de traitement des données d'image produites par la ou chaque caméra,
**caractérisé en ce que**
le projecteur dispose d'un élément générateur d'image par transmission ou par réflexion, permettant de moduler l'intensité du rayon produit par la source lumineuse, et d'un objectif de projection permettant de projeter sur la surface un motif variable formé sur l'élément générateur d'image,
où l'unité de commande (13) est également portable, et comprend des moyens nécessaires à la commande de l'élément générateur d'image et au déclenchement des prises de vue par la ou chaque caméra (2, 3),
où de plus l'unité de commande (13) comporte un dispositif de stockage d'énergie électrochimique destiné à l'alimentation électrique de la tête de mesure (7) et de l'unité de commande (13),
et où une liaison par câble est prévu entre la tête de mesure (7) et l'unité de commande (13), cette liaison par cable comprenant des câbles (10) d'alimentation en courant électrique, de câbles (9) de commande de l'élément générateur d'image, une liaison filaire (11) permettant la transmission des données d'image provenant de la ou chaque caméra (2, 3) vers l'unité de commande, et des signaux de commande de cette dernière vers la ou chaque caméra (2, 3), ainsi qu'une ligne (12) pour la transmission d'un signal de déclenchement destinés à l'unité de commande (13), sans que soit prévu de câble entre la tête de mesure (7) ou l'unité de commande (13) et d'éventuels autres composants fixes du dispositif.

2. Dispositif selon la revendication 1, **caractérisé en ce que** la tête de mesure (7) comprend deux caméras (2, 3) destinées à l'observation de la surface selon deux directions différentes.

3. Dispositif selon l'une des revendications 1 ou 2, **caractérisé en ce que** la ou chaque caméra (2, 3) de la tête de mesure (7) est reliée à l'unité de commande (13) par un câble USB ou FireWire.

4. Dispositif selon l'une des revendications 1 à 3, **caractérisé en ce qu'**il comprend de plus une unité de base (15) séparée spatialement de la tête de mesure (7) et de l'unité de commande (13), et prévoyant des moyens de transmission sans fil des données entre l'unité de base (15) et la tête de mesure (7) ou l'unité de commande (13), comprenant un canal de transmission des données extraites des images de la ou chaque caméra (2, 3).

5. Dispositif selon la revendication 4, **caractérisé en ce que** les dites données sont extraites des données d'image de la ou chaque caméra (2, 3) par un pré-traitement et/ou une analyse partielle au niveau de l'unité de commande (7).

6. Dispositif selon l'une des revendications 4 ou 5, **caractérisé en ce qu'**il comprend une caméra de liaison (19) fixe communiquant avec l'unité de base (15), les moyens de transmissions de données sans fil comprenant un canal dédié à l'acheminement de signaux de commande, en vue de la synchronisation du déclenchement de la ou chaque caméra (2, 3) de la tête de mesure (7) et de la caméra de liaison (19).

7. Dispositif selon l'une des revendications 1 à 6, **caractérisé en ce que** le domaine de la distance focale antérieure de la ou chaque caméra (2, 3) de la tête de mesure (7) comprend au moins une distance focale antérieure de l'intervalle 30-50 cm.

8. Dispositif selon l'une des revendications 1 à 7, **caractérisé** on ce que la ou chaque caméra (2, 3) de la tête de mesure (7) ont une optique variable.

9. Dispositif selon l'une des revendications 1 à 8, **caractérisé en ce qu'**il est agencé et programmé techniquement en vue de la mesure par triangulation des points-objet identifiés à l'aide des motifs projetés sur la surface, et observés par la ou chaque caméra (2, 3) de la tête de mesure (7),
où soit
(a) la tête de mesure (7) comprend deux caméras (2, 3) destinées à l'observation de la surface selon deux directions différentes, et le dispositif est alors agencé de sorte à
- produire au moins un motif à raies (17) sur l'élément générateur d'image,
- déterminer des valeurs de phase en différents points-image des deux caméras (2, 3) de la tête de mesure (7),
- identifier les points-image se correspondant entre eux et ayant la même valeur de phase, par comparaison des valeurs de phase le long des droites épipolaires correspondantes entre elles dans les plans-image des deux caméras (2,3) et
- mesurer par triangulation la position d'un point-objet à partir des points-image ainsi identifiés lui correspondant
soit
(b) le dispositif est agencé de sorte à
- produire au moins un motif à raies (17) sur l'élément générateur d'image,
- déterminer des valeurs de phase en différents points-image de la caméra (2) de la tête de mesure (7),
- identifier les points se correspondant entre eux sur un plan-image de la caméra (2) et sur l'élément générateur d'image, par comparaison des valeurs de phase le long des droites épipolaires correspondantes entre elles dans le plan-image de la caméra (2) et sur l'élément générateur d'image, et
- mesurer par triangulation la position d'un point-objet à partir des points ainsi identifiés lui correspondant.

10. Procédé permettant la mesure sans contact des coordonnées spatiales d'une surface donnée au moyen d'un dispositif selon l'une des revendications 1 à 9, qui comprend les étapes suivantes :
- projeter de divers motifs à raies (17) sur la surface, et enregistrement de la surface, ainsi éclairée par les motifs au moyen du projecteur (1) et de la ou chaque caméra (2, 3) de la tête de mesure (7) mise en oeuvre à la main,
- identifier des points-image se correspondant entre eux sur les plans-image des deux caméras (2, 3), ou bien des points se correspondant entre eux sur un plan-image de la caméra (2) et sur l'élément générateur d'image, grâce au motif à raies (17) projeté et
- mesurer par triangulation d'informations de profondeur pour certains points-objet, à partir des points-image ou des points ainsi identifiés et correspondant aux points-objet respectifs.

11. Procédé selon la revendication 10, **caractérisé en ce que**
- un signal de déclenchement est transmis depuis la tête de mesure (7) à l'unité de commande (13) en vue de l'enregistrement d'une séquence d'images,
- l'élément générateur d'images est contrôlé par l'unité de commande (13) en vue de la formation d'une séquence de motifs à raies (17), et que des signaux de déclenchement sont envoyés à la ou chaque caméra (2, 3) en vue de déclencher la séquence de prise de vue correspondante, où
- les données d'image ainsi acquises sont transmises par la ou chaque caméra (2, 3) à l'unité de commande (13), où elles sont prétraitées en vue de la constitution de données restituant les images de phase, et
- les données restituant les images de phase sont transmises sans fil par l'unité de commande (13) à une unité de base (15), laquelle effectuera les opérations de calcul successives permettant l'identification des points-image se correspondant entre eux et la triangulation des points-objet.

12. Procédé selon la revendication 11, **caractérisé en ce que** la séquence de prise de vue dure au maximum 150 ms, et/ou comprend huit à dix prises de vue enregistrées par au moins l'une des deux caméras (2, 3), ou chacune des deux caméras (2, 3).

13. Procédé selon l'une des revendications 10 ou 12, **caractérisé en ce que** différentes parties de la surface, se recouvrant partiellement, sont enregistrées à partir de différentes positions de la tête de mesure (7), par quoi l'on obtient à partir des contours de la surface ainsi saisis une image complète de cette dernière, grâce à la calibration des diverses positions de la tête de mesure (7) au moyen d'au moins une caméra de liaison (19) fixe également dirigée vers la surface à mesurer, et où les déclenchements de la caméra de liaison (19) seront synchronisés avec ceux de la ou chaque caméra (2, 3) de la tête de mesure (7) grâce à un transfert de données sans fil entre la tête de mesure (7) et la caméra de liaison (19).

14. Procédé selon l'une des revendications 10 à 13, **caractérisé en ce que**, en vue de l'identification des points-image se correspondant entre eux dans les plans-image des deux caméras (2, 3) de la tête de mesure (7) pour chacune des positions de celle-ci,
- on saisira des valeurs de phase du motif à raies (17) pour des points-image dans les plans-image des deux caméras (2, 3),
- on choisira des paires de droites épipolaires se correspondant à chaque fois entre elles dans les plans-image des deux caméras (2, 3) et
- on comparera les valeurs de phase le long des droites épipolaires se correspondant entre elles dans les plans-image des deux caméras (2, 3).

15. Procédé selon l'une des revendications 10 à 13, **caractérisé en ce que**, en vue de l'identification des points se correspondant entre eux dans le plan-image de la caméra (2) et sur l'élément générateur d'image pour chacune des positions de la tête de mesure (7)
- on saisira des valeurs de phase du motif à raies (17) pour des points-image dans un plan-image de la caméra (2),
- on choisira des paires de droites épipolaires se correspondant à chaque fois entre elles dans un plan-image de la caméra (2) et sur l'élément générateur d'image et
- on comparera les valeurs de phase le long des droites épipolaires se correspondant entre elles dans un plan-image de la caméra (2) et sur l'élément générateur d'image.
